# EUROPEAN PATENT SPECIFICATION

(11) **EP 4 418 177 B1**
(45) Date of publication and mention of the grant of the patent: **09.12.2026**
(21) Application number: 23201974.5
(22) Date of filing: 05.10.2023
(51) Int. Cl.: G06Q 10/0631, G06V 40/20, G06T 19/00, G06Q 10/0639, G06Q 10/0633, G06F 3/01, G06F 3/00, G06T 13/00

(54) **CONTROL DEVICE AND INFORMATION PRESENTATION METHOD**
STEUERUNGSVORRICHTUNG UND INFORMATIONSPRÄSENTATIONSVERFAHREN
DISPOSITIF DE COMMANDE ET PROCÉDÉ DE PRÉSENTATION D'INFORMATIONS

(30) Priority: 17.02.2023 JP 2023023664
(43) Date of publication of application: 21.08.2024
(73) Proprietor: Hitachi, Ltd., Chiyoda-ku Tokyo 100-8280 (JP)
(72) Inventor: OGI, Yuya, Tokyo, 100-8280 (JP); NUMATA, Takashi, Tokyo, 100-8280 (JP); IKEDA, Naohito, Tokyo, 100-8280 (JP)
(74) Representative: Strehl & Partner mbB

(56) References cited:
- WO-A1-2020/179128
- CN-A- 106 257 510
- JP-A- 2007 299 370
- US-A1- 2022 051 579

## Description

### 1. Field of the Invention

The present invention relates to a control device that presents information to a worker.

### 2. Description of the Related Art

In the related art, a manual using a paper medium or a manual displayed on a tablet terminal has been widely used as a method for giving an instruction about a work content of a worker on a site. Recently, there is an approach of giving the instruction about the work content by confirming an example moving image superimposed on a real space by using a head mounted display and an MR technology.

As a system for grasping a work situation by using a virtual space, there is the following related art. In JP 2020-144233 A, when a worker wearing an MR-HMD observes a construction object in a space as a construction site from various positions in various directions, a three-dimensional shape of the construction object is measured by a terminal device from an image imaged by the MR-HMD. The terminal device receives three-dimensional shape data representing the three-dimensional shape of the construction object, generates an image in which an input field of an inspection result regarding the construction of the construction object is superimposed on the three-dimensional shape of the construction object visible from an inspector in a virtual space having a common space and a common coordinate system, which is determined based on the three-dimensional shape data and a position and a posture of the VR-HMD worn by the inspector, and displays the image on the VR-HMD. A situation grasping assistance system in which the inspector inputs a result of an inspection performed while viewing the three-dimensional shape of the construction displayed on the VR-HMD to the input field has been described.

The document JP 2007 200370 A discloses a control device according to the preamble of claim 1. The document WO 2020/179128 A1 discloses a learning support system with a display unit that superimposes a model video on a learner's visual field image, and dynamically changes the display content of the model video according to characteristics of the learner's work operation. The document WO 2020/179128 A1 specifically discloses adjusting the playback speed to match the learner's speed, particularly slowing down the playback when the learner's work is slower than the instructor's pace.

The documents CN 106 257 510 A and US 2022/051579 A1 disclose further related control devices.

### SUMMARY OF THE INVENTION

The situation grasping assistance system described in JP 2020-144233 A described above dynamically changes a display content of the moving image in accordance with a stress value of a trainee, but there is no mechanism of a display order or non-display of a plurality of contents. Further, there is a problem that it is difficult to provide a content suitable for a level of the worker and it is difficult to change a behavior of the worker and improve work efficiency.

An object of the present invention is to improve a behavior change and work efficiency of a worker by providing a content suitable for a level of the worker. This object is achieved by a control device according to claim 1 and by an information presentation method according to claim 11.

A typical example of an invention to be disclosed in the present application is as follows. That is, a control device presents information to a worker, and includes a computer that includes a calculation device that executes predetermined calculation processing and a storage device accessible by the calculation device. The calculation device includes an acquisition unit that acquires work information of the worker, the calculation device includes a work process management unit that estimates a work process and a work speed executed by the worker from the work information, changes at least one of a reproduction speed and a reproduction position to precede a work of the worker, and creates a content for presenting information of a work of a next process, and the calculation device includes an output unit that outputs the created content.

According to one aspect of the present invention, the behavior change of the worker can be promoted, and the work efficiency can be improved. Other objects, configurations, and effects will be made apparent in the following descriptions of the embodiments.

### BRIEF DESCRIPTION OF THE DRAWINGS

Fig. 1 is a diagram illustrating a configuration of a work assistance system according to an embodiment of the present invention;
Fig. 2 is a block diagram illustrating a physical configuration of a control device of the present embodiment;
Fig. 3 is a block diagram illustrating a logical configuration of the control device of the present embodiment;
Fig. 4 is a diagram illustrating an example of a process list of the present embodiment;
Fig. 5 is a diagram illustrating an example of a structured database of the present embodiment;
Fig. 6 is a flowchart of processing executed by the control device of the present embodiment;
Fig. 7 is a timing chart illustrating an example in which a reproduction speed is changed in the present embodiment;
Fig. 8 is a timing chart illustrating an example in which a reproduction start position is changed in the present embodiment;
Fig. 9 is a logical block diagram of a control device and a periphery thereof according to a second embodiment;
Fig. 10 is a table representing an example of a process list of the second embodiment;
Fig. 11 is a flowchart of processing executed by the control device of the second embodiment; and
Fig. 12 is a flowchart of processing executed by a control device of a third embodiment.

### DESCRIPTION OF THE PREFERRED EMBODIMENTS

### <First embodiment>

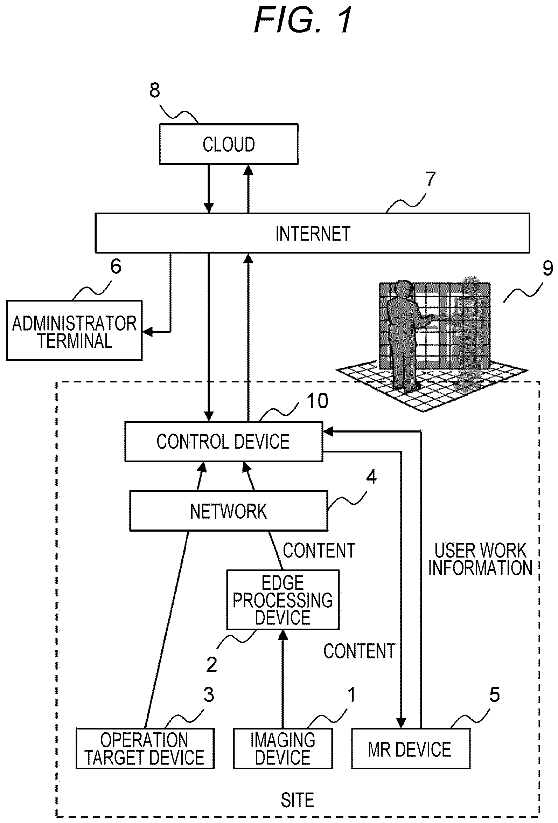

Fig. 1 is a diagram illustrating a configuration of a work assistance system according to an embodiment of the present invention.

The work assistance system of the present embodiment includes an imaging device 1, an edge processing device 2 connected to the imaging device 1, a control device 10 that processes an observation result by the imaging device 1, a network 4 that connects the edge processing device 2 to the control device 10, and an MR device 5. An operation target device 3 operated by a wearer of the MR device 5 may be connected to the control device 10 via the network 4. The work assistance system may include an administrator terminal 6.

The imaging device 1 is a sensor that observes a situation of a site to be shared in a virtual three-dimensional space (metaverse space) 9. The imaging device 1 can acquire three-dimensional point group data, and for example, a TOF camera that outputs a distance-given image on which a distance D for each pixel is given to RGB data can be used. The imaging device 1 may be a stereo camera including two complementary metal oxide semiconductor (CMOS) image sensors, a structured light type sensor in which a projection pattern light emitting element and an image sensor are combined, a sensor device in which a distance sensor and a simple RGB camera are combined to adjust a relationship between pixels, or the like. A sensor having a function of estimating distance information of each pixel from an RGB image by using machine learning or the like may be used. A plurality of imaging devices 1 are provided to cover a wide range of a site including a work range of a worker, and are installed such that observation ranges of the imaging devices 1 overlap each other. The imaging device 1 observes, as an object, a static object whose shape and position do not change, such as equipment installed on a site or a structure of a room, or a dynamic object whose shape and position change, such as a vehicle, a construction machine, a robot, a worker, a tool, or a work object. The imaging device 1 may be a camera that images an image of a worker capable of performing motion capture processing by the control device 10.

The edge processing device 2 is a computer that generates 3D sensing data including a plurality of pieces of three-dimensional surface data and a skeleton model of a person from the point group data acquired by the imaging device 1. The edge processing device 2 generates the 3D sensing data from the point group data, and thus, a communication amount between the edge processing device 2 and the control device 10 is reduced. Accordingly, tightening of the network 4 can be suppressed. In a case where there is no problem in a band of the network 4, three-dimensional information may be generated after the point group data is transferred to the control device 10 as it is.

The control device 10 is a computer that realizes edge computing provided in the network 4, and, in the present embodiment, the control device stores, as a work log, the three-dimensional information collected from one or a plurality of edge processing devices 2, and generates the virtual three-dimensional space 9 from the three-dimensional information. The control device 10 may estimate a motion of the worker by motion capture processing using the image imaged by the imaging device 1.

The work assistance system of the present embodiment generates the virtual three-dimensional space 9 from the three-dimensional information by the following procedure.

First, the imaging device 1 observes the situation of the site, and transfers the observed point group data to the edge processing device 2. The edge processing device 2 generates three-dimensional information including the point group data and the three-dimensional model data observed by the imaging device 1. For example, the edge processing device 2 integrates the pieces of point group data observed by the plurality of imaging devices 1 based on a relationship between positions and observation directions of the plurality of imaging devices 1.

Thereafter, the edge processing device 2 executes static object high-speed three-dimensional modeling processing of constructing an outer surface of the static object by using an algorithm of generating a surface based on a positional relationship between adjacent point groups. A range in which a shape or a position changes is extracted from the point group data, a skeleton model obtained by skeleton estimation is generated, and dynamic object high-speed three-dimensional modeling processing of modeling a person is executed.

Thereafter, the edge processing device 2 segments a three-dimensional model by determining discrimination between the dynamic object and the static object and a range that is meaningful as an object according to the continuity of the constructed surface and the range of the dynamic object.

The control device 10 generates an avatar of a site worker from the skeleton model of the recognized dynamic object. The generated avatar and the three-dimensional model data of the recognized static object are mapped to generate the virtual three-dimensional space 9.

The control device 10 recognizes the segmented three-dimensional model and specifies an object. For example, a type of the object can be estimated by a machine learning model in which an image of an object installed in the site is trained or a model in which a three-dimensional shape of the object installed in the site is recorded.

The control device 10 recognizes a type of a behavior of the worker from motion data including the motion and position of the worker at the site represented by the skeleton model. For example, the behavior of the worker can be estimated by the machine learning model trained from the motion data due to the change in the skeleton model of the worker in the past and the behavior of the worker.

The control device 10 recognizes a work of the worker by integrating the specified object and the recognized behavior of the worker. For example, the work of the worker can be estimated by a machine learning model trained by the object and the behavior or a knowledge graph in which the object and the behavior are associated with each other.

The control device 10 records the recognized work in the structured database 18. In the structured database 18, the object and the behavior used for recognizing the work, and the motion data due to the change in the skeleton model in the behavior are registered as related information.

The network 4 is a wireless network suitable for data communication that connects the edge processing device 2 and the control device 10, and for example, a high-speed and low-delay 5G network can be used. In a case where the edge processing device 2 is fixedly installed, a wired network may be used.

The MR device 5 is a device worn by the worker who operates the operation target device 3 on the site, and includes a processor that executes a program, a memory that stores the program and data, a network interface that communicates with the control device 10, and a display that displays an image transmitted from the control device 10. The display is a transmissive type, and the wearer can visually recognize a periphery through the display in a superimposed manner with a video transmitted from the control device 10. The MR device 5 may include a camera that images the front of the wearer, and may transmit the video imaged by the camera to the control device 10. The MR device 5 may display the video imaged by the camera that images the front of the wearer in the superimposed manner with the video transmitted from the control device 10. The MR device 5 may include a camera that images eyes of the wearer, and may detect a line-of-sight direction of the wearer from the video imaged by the camera. The MR device 5 may include a microphone that detects a sound that the wearer is listening to. The worker can view information regarding the work displayed on the MR device 5 and can share the virtual three-dimensional space 9.

The worker may wear a wearable sensor (for example, a tactile glove). The tactile glove detects a tactile sensation of the worker and transmits the tactile sense to the control device 10. The wearable sensor may detect motion of fingers of the worker, and the control device 10 may generate a skeleton model of the worker from the motion of the fingers detected by the wearable sensor and may detect the behavior of the worker.

The administrator terminal 6 is a computer used by an administrator of the site who uses the work assistance system, and can display a progress situation the work of the worker and information (for example, an overhead image) of the virtual three-dimensional space 9.

The work assistance system of the present embodiment may include a cloud 8 that forms a large-scale virtual three-dimensional space for sharing the pieces of three-dimensional information collected from the plurality of control devices 10. The large-scale virtual three-dimensional space formed in the cloud 8 is obtained by integrating virtual three-dimensional spaces formed by the plurality of control devices 10, and can form a large-scale virtual three-dimensional space in a wide range.

Security of the work assistance system may be secured by authenticating access to the control device 10 from the MR device 5 and the administrator terminal 6 by an ID and a password or by addresses unique to these devices (for example, MAC addresses).

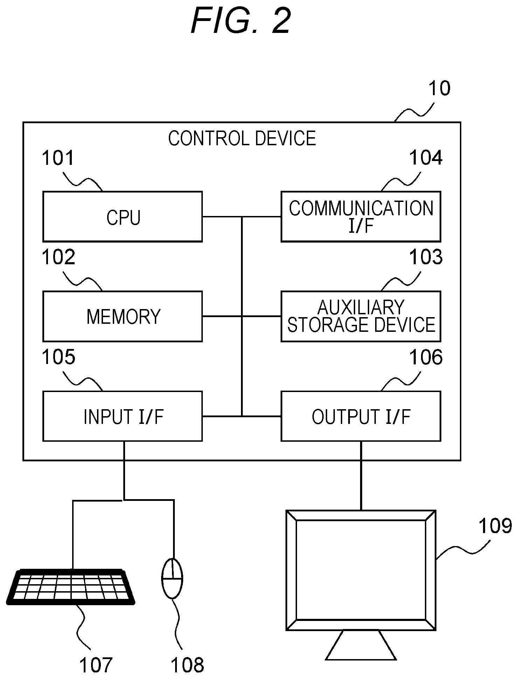

Fig. 2 is a block diagram illustrating a physical configuration of a computer provided in the work assistance system of the present embodiment. Although Fig. 2 illustrates the control device 10 as an example of the computer, the edge processing device 2 and the administrator terminal 6 may also have the same configuration.

The control device 10 of the present embodiment is a computer including a processor (CPU) 101, a memory 102, an auxiliary storage device 103, and a communication interface 104. The control device 10 may include an input interface 105 and an output interface 106.

The processor 101 is a calculation device that executes a program stored in the memory 102. The processor 101 executes various programs to realize functional units (for example, a user work information acquisition unit 11, a work process management unit 12, a communication unit 16, the content output unit 19, and the like) of the control device 10. A part of kinds of processing performed by the processor 101 executing the program may be executed by another calculation device (for example, hardware such as a GPU, an ASIC, or an FPGA).

The memory 102 includes a ROM which is a nonvolatile storage element and a RAM which is a volatile storage element. The ROM stores an invariable program (for example, BIOS) and the like. The RAM is a high-speed and volatile storage element such as a dynamic random access memory (DRAM), and temporarily stores a program executed by the processor 101 and data used when the program is executed.

The auxiliary storage device 103 is, for example, a large-capacity nonvolatile storage device such as a magnetic storage device (HDD) or a flash memory (SSD). The auxiliary storage device 103 stores data used when the processor 101 executes the program and the program executed by the processor 101. That is, each function of the control device 10 is realized by the program read from the auxiliary storage device 103, loaded into the memory 102, and executed by the processor 101.

The communication interface 104 is a network interface device that controls communication with other devices (for example, the edge processing device 2 and the cloud 8) according to a predetermined protocol.

The input interface 105 is an interface to which an input device such as a keyboard 107 or a mouse 108 is connected to receive an input from an operator. The output interface 106 is an interface to which an output device such as a display device 109 or a printer (not illustrated) is connected to output an execution result of the program in a format visually recognizable by the user. The administrator terminal 6 connected to the control device 10 via a network may provide the input device and the output device. In this case, the control device 10 may have a function of a web server, and the administrator terminal 6 may access the control device 10 with a predetermined protocol (for example, http).

The program executed by the processor 101 is provided to the control device 10 via a removable medium (CD-ROM, flash memory, or the like) or a network, and is stored in the nonvolatile auxiliary storage device 103 that is a non-transitory storage medium. Thus, the control device 10 may have an interface for reading data from the removable medium.

The control device 10 is a computer system constructed physically one computer or constructed on a plurality of computers constructed logically or physically, and may operate on a virtual computer constructed on a plurality of physical computer resources. For example, each functional unit may operate on a separate physical or logical computer, or a plurality of functional units may operate on one physical or logical computer in combination.

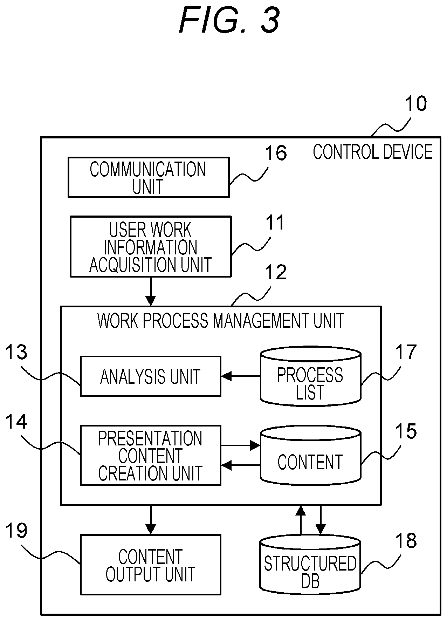

Fig. 3 is a logical block diagram of the control device 10 of the present embodiment.

The control device 10 includes a user work information acquisition unit 11, a work process management unit 12, a communication unit 16, a structured database 18, and a content output unit 19. The work process management unit 12 includes an analysis unit 13, a presentation content creation unit 14, a content database 15, and a process list 17.

The user work information acquisition unit 11 acquires work information of the worker from the imaging device 1 and the MR device 5. The work information is, for example, information regarding an operation of the worker, such as operations of the fingers, positions of the hands, a position of the head, and a line of sight.

The analysis unit 13 analyzes the work information and estimates the work process and the work speed. The content database 15 stores the content (for example, a work instruction such as a manual) to be presented to the worker. The presentation content creation unit 14 creates the content to be presented to the worker. In the present embodiment, the content read from the content database 15 is processed to create the content to be presented to the worker. The communication unit 16 controls communication with another device (for example, the edge processing device 2). The process list 17 records the operation of the worker in the work process. The structured database 18 records the analyzed work of the worker. The content output unit 19 outputs the content created by the presentation content creation unit 14 to present the content to the worker.

The content stored in the content database 15 includes character information indicating information related to the work by characters, voice information indicating information related to the work by voice, pointer information indicating a position related to the work, still image information indicating information related to the work by a still image, and moving image information indicating information related to the work by a moving image.

The content stored in the content database 15 may be created such that it can be seen whether or not an exemplary worker appearing in the content is in contact with the work object. For example, when the worker is in contact with the work object, a mark indicating contact may be displayed, or a contact part (for example, both or one of the hand and the work object) may be displayed in a different color. When the content is created in this manner, it is possible to clearly instruct a work content even with an image imaged in a direction in which it is difficult to recognize whether or not the worker is in contact with the work object, such as a direction in which the worker cannot see the hand of the worker.

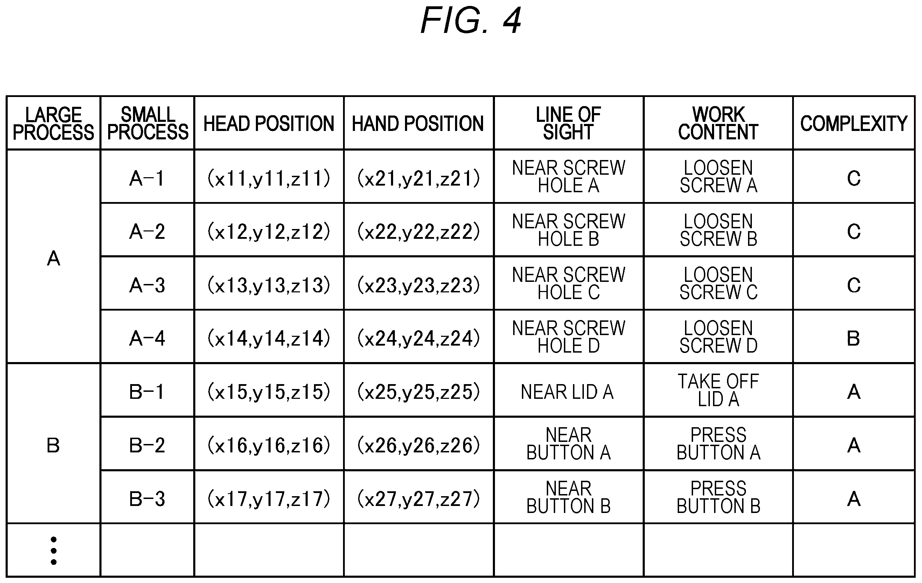

Fig. 4 is a diagram illustrating an example of the process list 17 of the present embodiment.

The process list 17 records pieces of data of a large process, a small process, a head position, a hand position, a line of sight, a work content, and complexity in association with each other. Although the process list 17 is illustrated in a list format in Fig. 4, the process list may be constructed by another data structure.

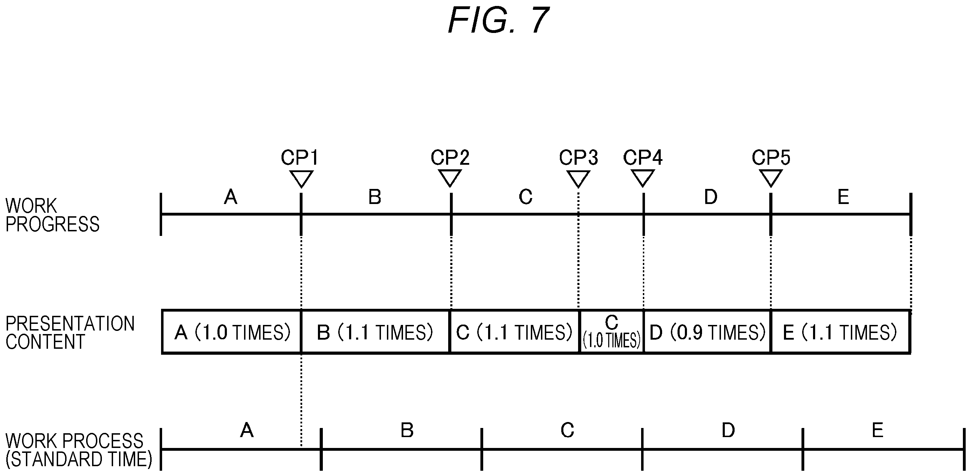

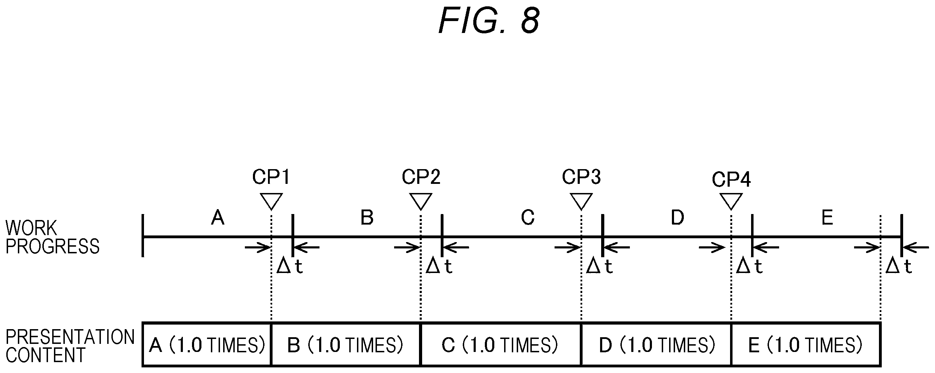

The large process and the small process are pieces of identification information for uniquely identifying the process, the large process corresponds to a "process" to be described later with reference to Figs. 7 and 8, and the small process corresponds to a subdivided small process to be described later with reference to Figs. 7 and 8. The head position, the hand position, and the line of sight are standard motions of the worker in the process, and correspond to pieces of motion data of the worker acquired as the work information by the analysis unit 13. The head position and the hand position are analyzed from the image imaged by the imaging device 1, and the line of sight is analyzed from the line-of-sight direction acquired by the MR device 5 and the object present in the line-of-sight direction. The work content is the work content of the process. The complexity is complexity of the process, and may be determined by, for example, the number of motions in the process, the amount of movement of the hand, a success rate or a failure rate of the work.

The process list 17 is referred to in order to derive, as explanatory variables, the large process, the small process, the work content, and the complexity which are objective variables with the head position, the hand position, and the line of sight.

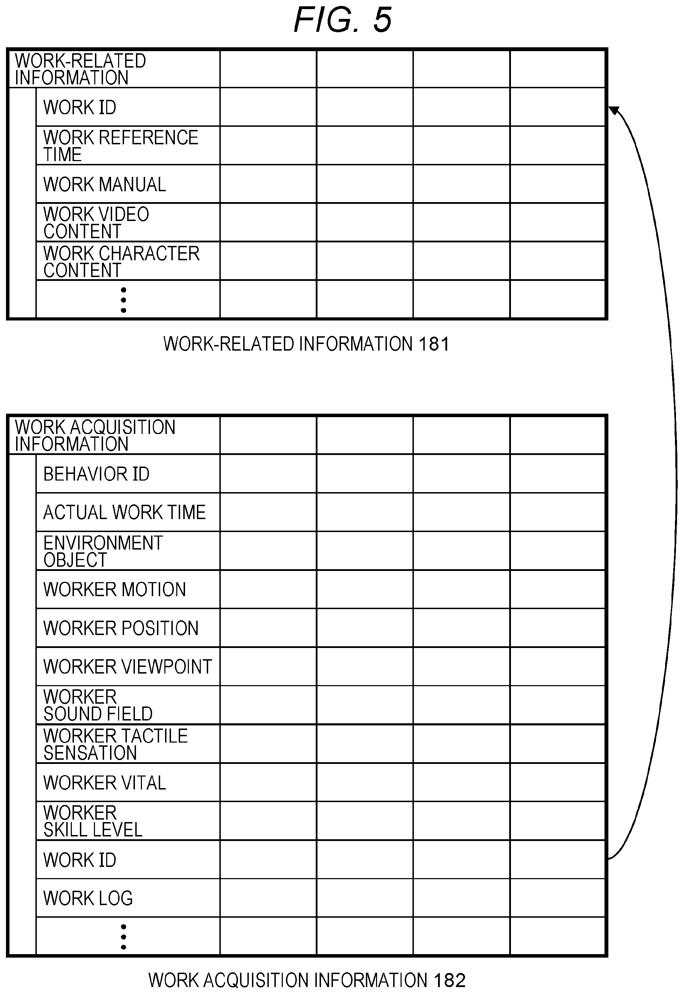

Fig. 5 is a diagram illustrating a configuration example of the structured database 18 of the present embodiment.

The structured database 18 records the work analyzed by the analysis unit 13. Although the structured database 18 is illustrated in a table format in Fig. 5, the structured database may have another data structure.

The structured database 18 includes work-related information 181 recorded in advance and work acquisition information 182 acquired in accordance with the behavior of the worker.

The work-related information 181 stores a work ID, a work reference time, a work manual, a work video content, and a work character content in association with each other. The work ID is identification information of the work recorded in advance. The work reference time is a standard time of the work performed by the worker. The work manual is an instruction of the work performed by the worker, and may record information of a link for accessing the instruction. The work video content is a video of a work previously performed by a skilled person or the worker for the work performed by the worker, and may record identification information of the video and information of a link for accessing the video. The work character content is character information related to the work performed by the worker, and identification information of the character information or information of a link for accessing the character information may be recorded.

The work acquisition information 182 stores a behavior ID, an actual work time, an environmental object, a worker motion, a worker position, a worker viewpoint, a worker sound field, a worker tactile sensation, a worker vital, a worker skill level, a work ID, and a work log in association with one another. The behavior ID is identification information of a behavior that is a series of operations of the worker. The actual work time is a time required for the behavior of the worker. The environment object is an object (for example, a room, a floor, a device, a tool, or a screw) imaged in relation to the behavior of the worker. The worker motion is time-series data of coordinates of feature points (indirect points such as fingers and arms, and head) of the skeleton model of the worker. The worker position is a position of a feature point (head, left and right hands, or the like) of the worker and a positional relationship (distance and direction) with the environmental object. The worker viewpoint is a line of sight of the worker or an intersection of a surface of an object present in the line-of-sight direction and the line of sight. The worker sound field is a sound heard by the worker, and may record information of a link for accessing sound data. The worker tactile sensation is a tactile sensation of the worker acquired by the tactile glove. The worker vital is a voice, an expression, a pulse estimated from a change in blood flow, or the like of the worker, and is used to estimate emotions and attributes of the worker. The worker skill level is a skill level of the worker detected in skill sensing processing. The work ID is a work of the worker recognized in work recognition processing. The work log is an execution result of the work, and normal end, rework, abnormal end, and the like are recorded.

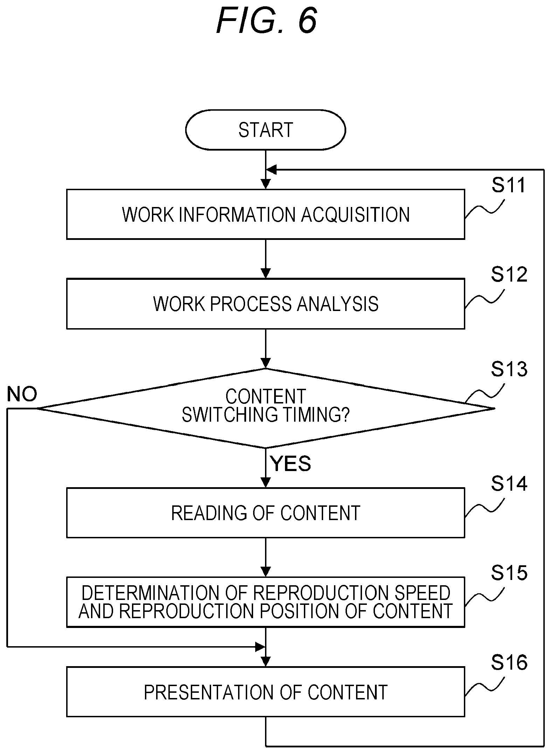

Fig. 6 is a flowchart of processing executed by the control device 10 of the present embodiment.

First, the user work information acquisition unit 11 acquires the work information (S11).

Subsequently, the analysis unit 13 refers to the process list 17, analyzes the acquired work information, and estimates the work process and the work speed performed by the worker (S12). For example, the work process performed by the worker may be estimated based on a matching degree between the motion data such as the operations of the fingers, the positions of the hands, the position of the head, and the line of sight acquired as the work information and the standard operation of the work process recorded in the predetermined process list 17. The work process may be estimated by the worker performing a specific operation. For example, when the worker is performing a finger pointing confirmation operation and a line-of-sight position of the worker is a place to be confirmed in the process, it may be determined that correct finger pointing confirmation is performed, and it may be determined that the process is ended and that the process proceeds to a next process. The work process may be estimated from the work information by using a machine learning model in which the operation and the work process of the worker are learned. The process may be estimated by detecting an operation of a switch physically or on a screen by the worker. A ratio between an estimated process end timing and the standard time of each process is calculated, and the work speed of the worker is calculated.

Subsequently, the work process management unit 12 determines whether or not the timing is a content switching timing (S13). As illustrated in Figs. 7 and 8, a content switching timing (CP) is determined in the moving image content to be presented to the worker, and it is determined whether or not a currently reproduced moving image reaches the content switching timing. It may be determined that a period from a predetermined time (for example, two seconds) before the content switching timing to the end of the content is the content switching timing. Since reproduction of new content can be started even during a period in which the content is not reproduced, it may be determined that the period in which the content is not reproduced is the content switching timing. A timing at which the analysis unit 13 estimates that the large process is ended may be set as the content switching timing.

When it is determined that the timing is not the content switching timing, in step S16, the presentation content creation unit 14 continues the reproduction of the currently reproduced content.

When it is determined that the timing is the content switching timing, the presentation content creation unit 14 refers to the work-related information 181 of the structured database 18, specifies the content to be presented to the worker in a next work process, and reads the specified content from the content database 15 (S14). When the presentation content creation unit 14 selects the content to be presented to include at least two or more of the character information, the voice information, the pointer information, the still image information, and the moving image information, the information can be presented to the worker in an easy-to-understand manner.

The presentation content creation unit 14 determines a reproduction speed and a reproduction position of the content based on a setting of the user and the progress of the work of the worker (S15). As described above, the presentation content creation unit 14 creates the content to be switched to a scene representing each process at the content switching timing.

The presentation content creation unit 14 transmits the content to the MR device 5, and presents the content whose reproduction speed and reproduction position are adjusted to the worker (S16).

Fig. 7 is a timing chart illustrating an example in which the reproduction speed is changed to present information on a work preceding the progress of the work in the present embodiment.

Fig. 7 illustrates an actual work progress, the content to be presented to the worker, and the standard time of the work process according to the progress of the work process. The content switching timing CP is set to the work process or an end timing of the content.

Since a first process A is ended in a shorter time than the standard time, a content of the process A is ended at a content switching timing CP1 at which the process A is ended, and a content of a next process B is presented at a slightly faster speed (for example, 1.1 times speed).

Since the next process B is slightly longer than the standard time ÷ 1.1 but is ended in a shorter time than the standard time, a content of a next process C is presented at the same speed (for example, 1.1 times speed) as the process B from a content switching timing CP2 at which the process B is ended.

In the next process C, since the display of the content of the process C is ended at the standard time ÷ 1.1 (CP3) but the process C has not ended yet, the content of the process C is presented again at 1.0 times. The content to be presented again due to the end of the process may be presented from an optimum position (for example, a position where the work is currently performed) in the middle of the process C by the work process analysis. As described above, by the representation of the content of the current process, a cause of the process in which the work is delayed (for example, the work is stopped without being successful) can be eliminated, and the work can be progressed.

After the end of the process C, a next process D is started (CP4). In the process D, since the process C took a longer time than the standard time, a content of the process D is presented at a slightly slower speed (for example, 0.9 times speed).

Since the process D is ended in a shorter time than the standard time, the content of the process D is ended at a content switching timing CP5 at which the process D is ended, and a content of a next process E is presented at a slightly faster speed (for example, 1.1 times speed).

In the present embodiment, the content reproduction speed for each process may be changed fast or slow in a predetermined step. At this time, the content reproduction speed may be increased until the work speed becomes slower than the reproduction speed, and the content reproduction speed may be decreased until the work speed becomes faster than the reproduction speed.

The reproduction speed of the content may be determined according to a shortening rate or an extension rate of a previous stroke. For example, when the working speed is 0.8 times the reproduction speed, the content of the next process may be reproduced at 1.25 times the reproduction speed, and when the working speed is 1.25 times the reproduction speed, the content of the next process may be reproduced at 0.8 times the reproduction speed.

The reproduction speed may be determined according to the complexity of the work content. For example, the content of the process C having high complexity recorded in the process list 17 is presented at 0.9 times speed slower than usual, and the content of the process A having low complexity is presented at 1.1 times speed faster than usual. The complexity may be used as a coefficient by which the work speed of the worker is multiplied. For example, in the above-described example, although the process B is reproduced at a speed of 1.1 times speed, the content of the process B may be presented at a speed of 1.21 times speed by multiplying the work speed by a coefficient 1.1 of complexity A.

In Fig. 7, although a presentation speed of the content is changed for each process, the process may be subdivided into a plurality of small processes, a check point (not illustrated) may be provided at a pause of the small process (that is, in the middle of the large process), it may be determined whether or not the work is earlier or later than the standard time for each check point, and the presentation speed and a reproduction start position of the content may be changed.

Fig. 8 is a timing chart illustrating an example in which the reproduction start position is changed to present information on a work preceding the progress of work in the present embodiment.

Fig. 8 illustrates the actual work progress and the content to be presented to the worker according to the progress of the work process. The content switching timing CP is set to the work process or an end timing of the content.

The presentation of a content of a next process B is started at a content switching timing CP1 provided at a predetermined time (Δt) at which a first process A is ended. The predetermined time (Δt) in which a timing to start the presentation of the content is determined is desirably 0.5 seconds to 3 seconds. As described above, the presentation of the content of the process is started before the start of the process, and thus, the information of the next process can be acquired in advance, and the process can smoothly proceed to the next process.

In Fig. 8, although a presentation start timing of the content is changed for each process, the process may be divided into a plurality of small processes, a check point (not illustrated) may be provided at a pause of the small process (that is, in the middle of the large process), it may be determined whether or not the work is earlier or later than the standard time for each check point, and the reproduction position and the presentation speed of the content may be changed.

As described above, according to the mode illustrated in Fig. 7, the reproduction speed of the content of the next process is adjusted according to the work speed of the work process of the worker, and according to the mode illustrated in Fig. 8, the reproduction start position of the content of the next process is adjusted according to the work speed of the work process of the worker, and the information of the work preceding the progress of the work by the worker is presented.

Although Fig. 7 illustrates an example in which the reproduction speed is changed and Fig. 8 illustrates an example in which the reproduction start position is changed, the information of the work may be presented in advance by changing both the reproduction speed and the reproduction start position.

As described above, according to the first embodiment of the present invention, the reproduction speed faster than the work of the worker or the process preceding the actual work is presented, and thus, a behavior change of the worker is promoted. Accordingly, work efficiency can be improved.

### <Second embodiment>

In a second embodiment, the process performed by the worker is estimated while referring to the environment information of the virtual three-dimensional space 9. In the second embodiment, differences from the first embodiment described above will be mainly described, and the description of the same configuration and function as those of the first embodiment will be omitted.

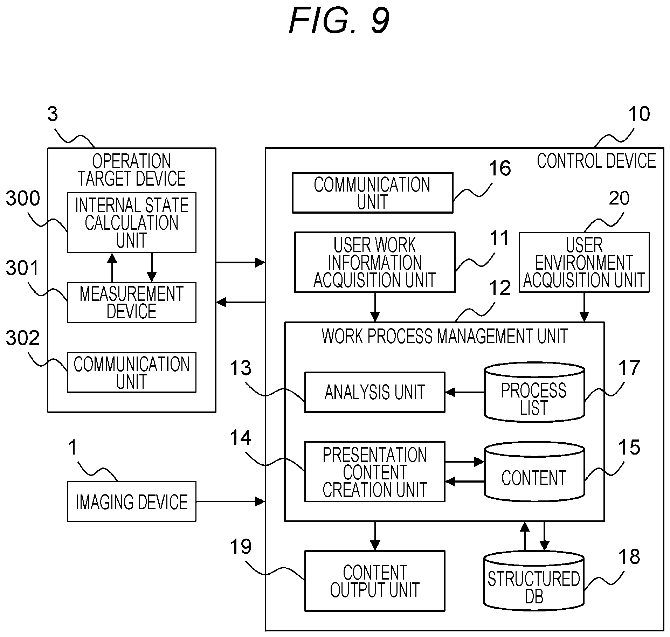

Fig. 9 is a logical block diagram of the control device 10 of the present embodiment and a periphery thereof.

The control device 10 is connected to be able to communicate with the operation target device 3 and the imaging device 1. The control device 10 includes a user work information acquisition unit 11, a work process management unit 12, a communication unit 16, a structured database 18, a content output unit 19, and a user environment information acquisition unit 20. The work process management unit 12 includes an analysis unit 13, a presentation content creation unit 14, a content database 15, and a process list 17.

The user work information acquisition unit 11, the work process management unit 12, the presentation content creation unit 14, the content database 15, the communication unit 16, the structured database 18, and the content output unit 19 are the same as those of the control device 10 of the first embodiment described above. The user environment information acquisition unit 20 acquires information on a state of an object or a person other than the worker accumulated as the environment information of the virtual three-dimensional space 9. For example, an operation history and a state of the operation target device 3 and information on the site imaged by the imaging device 1 are acquired. The analysis unit 13 analyzes the work information from the motion and the environment information of the worker, and estimates the work process and the work speed.

The operation target device 3 includes an internal state calculation unit 300, a measurement device 301, and a communication unit 302. The measurement device 301 measures an operation state of the operation target device 3. The internal state calculation unit 300 derives a state of the operation target device 3 according to a measurement result by the measurement device 301, an operation state of an operation panel, and the like. The communication unit 302 controls communication with another device (for example, the control device 10).

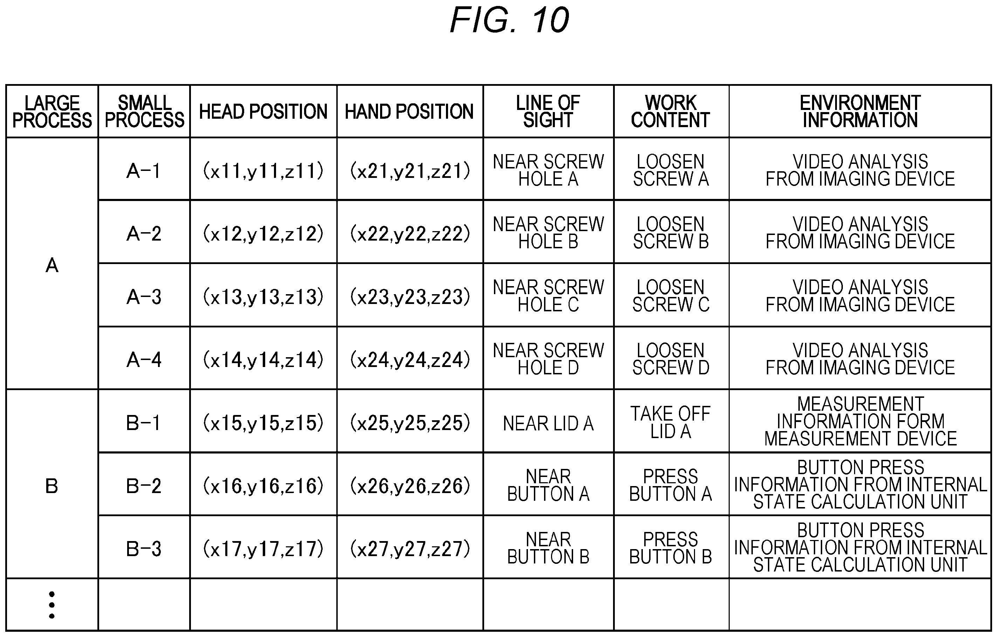

Fig. 10 is a diagram illustrating an example of the process list 17 of the present embodiment.

The process list 17 records pieces of data of a large process, a small process, a head position, a hand position, a line of sight, a work content, and environment information in association with each other. The process list 17 of the second embodiment may record the data of the complexity. Although the process list 17 is illustrated in a list format in Fig. 10, the process list may be constructed by another data structure.

The large process, the small process, the head position, the hand position, the line of sight, and the work content are the same as those in the process list 17 of the first embodiment described above. The environment information is information on the operation target device 3 and an operation target object on which the worker performs the work, and is estimated from a video of the site imaged by the imaging device 1 and the operation target device 3.

In the present embodiment, the process list 17 is referred to in order to derive, as explanatory variables, the large process, the small process, the work content, and the complexity which are objective variables with the head position, the hand position, the line of sight, and the environment information.

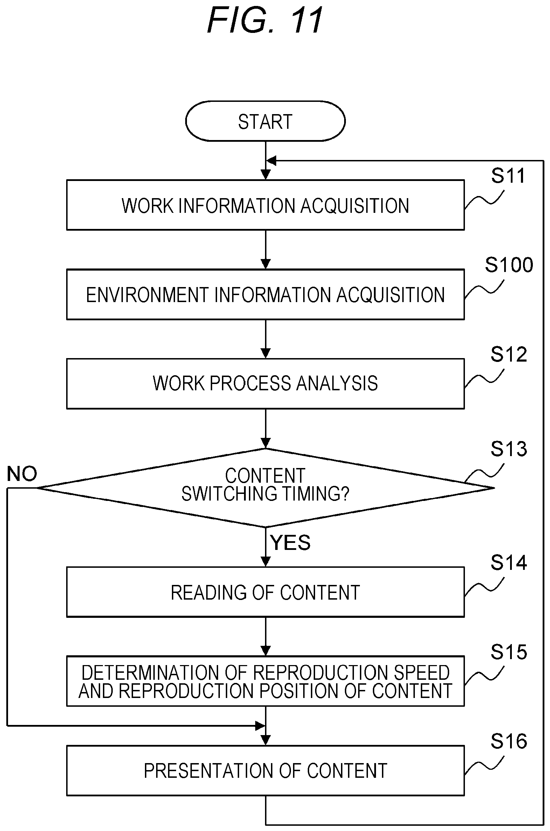

Fig. 11 is a flowchart of processing executed by the control device 10 of the present embodiment.

First, the user work information acquisition unit 11 acquires the work information (S11).

Subsequently, the user environment information acquisition unit 20 acquires information on a state of an object or a person other than the worker accumulated as the environment information of the virtual three-dimensional space 9 (S100). As described above, the environment information is, for example, an operation history and a state of the operation target device 3, and information on the site imaged by the imaging device 1.

Subsequently, the analysis unit 13 refers to the process list 17, analyzes the acquired work information and environment information, and estimates the work process performed by the worker (S12). For example, the work process performed by the worker may be estimated based on a matching degree between the motion data such as the operations of the fingers, the positions of the hands, the position of the head, and the line of sight acquired as the work information and the standard operation of the work process recorded in the predetermined process list 17. The work process performed by the worker may be estimated based on an operation history of the operation panel of the operation target device 3 and a measurement result (for example, a current value) acquired as the environment information. The work process may be estimated by the worker performing a specific operation. For example, when the worker is performing a finger pointing confirmation operation and a line-of-sight position of the worker is a place to be confirmed in the process, it may be determined that correct finger pointing confirmation is performed, and it may be determined that the process is ended and that the process proceeds to a next process. A work configuration may be estimated from the work information by using a machine learning model in which the operation and the work process of the worker are trained. The process may be estimated by detecting an operation of a switch physically or on a screen by the worker. A ratio between an estimated process end timing and the standard time of each process is calculated, and the work speed of the worker is calculated.

Subsequently, the work process management unit 12 determines whether or not the timing is a content switching timing (S13). When it is determined that the timing is the content switching timing, the presentation content creation unit 14 reads the content from the content database 15 (S14), and determines the reproduction speed and the reproduction position of the content (S15). The presentation content creation unit 14 transmits the content to the MR device 5, and presents the content whose reproduction speed and reproduction position are adjusted to the worker (S16). The kinds of processing in steps S13 to S16 are the same as those in the first embodiment described above.

As described above, according to the second embodiment of the present invention, accuracy of the process estimation can be improved in addition to the effects of the first embodiment.

### <Third embodiment>

In a third embodiment, the content to be presented to the worker is changed in accordance with a skill level of the worker. In the third embodiment, differences from the first embodiment described above will be mainly described, and the description of the same configuration and function as those of the first embodiment will be omitted.

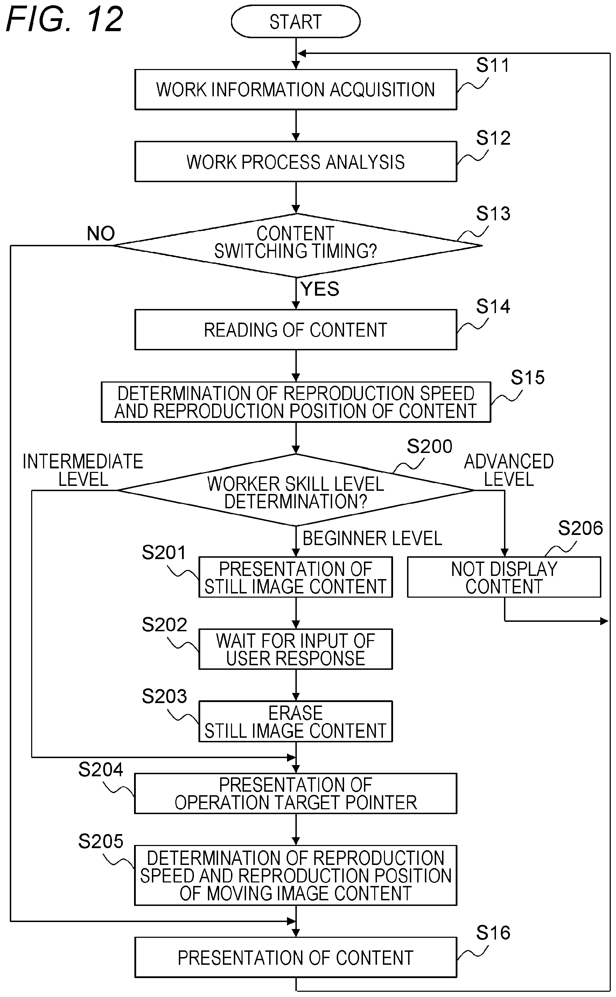

Fig. 12 is a flowchart of processing executed by the control device 10 of the present embodiment.

First, the user work information acquisition unit 11 acquires the work information (S11). Subsequently, the analysis unit 13 refers to the process list 17, analyzes the acquired work information, and estimates the work process performed by the worker (S12). Subsequently, the work process management unit 12 determines whether or not the timing is a content switching timing (S13). When it is determined that the timing is the content switching timing, the presentation content creation unit 14 reads the content from the content database 15 (S14), and determines the reproduction speed and the reproduction position of the content (S15). The kinds of processing in steps S11 to S15 are the same as those in the first embodiment described above.

Subsequently, the presentation content creation unit 14 determines the skill level of the worker (S200). The skill level of the worker may be determined by using a difference between a work time of a previous process and the standard time, may be determined by using a past work record, or may be determined by using skill level data registered in advance.

In a case where it is determined that the skill level is a beginner level, since it is desirable to present a detailed content, the presentation content creation unit 14 transmits a still image content to the MR device 5, presents the still image content to the worker (S201), and waits for input of a response from the user (S202). When the user who has viewed the still image content inputs a response, the presentation content creation unit 14 erases the still image content (S203), and presents an operation target pointer indicating a position to be operated by the worker (S204). Thereafter, the presentation content creation unit 14 determines the reproduction speed and the reproduction position of the content (S205).

In a case where it is determined that the skill level is an intermediate-level, the presentation content creation unit 14 presents the operation target pointer indicating the position to be operated by the worker (S204). Thereafter, the reproduction speed and the reproduction position of the content are determined (S205).

The presentation content creation unit 14 transmits the content to the MR device 5, and presents the content whose reproduction speed and reproduction position are adjusted to the worker (S16).

In a case where it is determined that the skill level is an advanced level, since the presentation of the content is necessary, the content is hidden (S206), and the processing returns to step S11.

As described above, according to the third embodiment of the present invention, there are effects such as reduction of work errors due to the detailed content presentation to beginners and reduction of unnecessary work instructions to advanced-level persons in addition to the effects of the first embodiment.

The present invention is not limited to the aforementioned embodiments, and includes various modification examples and equivalent configurations within the gist of the appended claims. For example, the aforementioned embodiments are described in detail in order to facilitate easy understanding of the present invention, and the present invention is not limited to necessarily including all the described components. A part of the configuration of one embodiment may be replaced with the configuration of another embodiment. The configuration of another embodiment may be added to the configuration of one embodiment. Another configuration may be added, removed, and substituted to, from, and for some of the configurations of the aforementioned embodiments.

A part or all of the aforementioned configurations, functions, processing units, and processing means may be realized by hardware by being designed with, for example, an integrated circuit. Alternatively, the processor interprets and executes a program for realizing the functions, and thus, a part or all of the aforementioned configurations, functions, processing units, and processing means may be realized by software.

Information of programs, tables, and files for realizing the functions can be stored in a storage device such as a memory, a hard disk, or a solid state drive (SSD), or a recording medium such as an IC card, an SD card, or a DVD.

Control lines and information lines illustrate lines which are considered to be necessary for the description, and not all the control lines and information lines necessary in the implementation are necessarily illustrated. Almost all the configurations may be considered to be actually connected to each other.

## Claims

1. A control device that presents information to a worker, comprising
a computer (10) that includes a calculation device (101) that executes predetermined calculation processing and a storage device (102, 103) accessible by the calculation device (101), wherein
the calculation device (101) includes an acquisition unit (11) that acquires work information of the worker, said work information being information regarding an operation of the worker, including at least on of operations of the fingers, position of the hands, a position of the head, and a line of sight and environment information of a periphery of the worker, wherein the environment information includes information of an object on which the worker performs a work,
the calculation device (101) includes a work process management unit (12) that estimates a work process and a work speed executed by the worker from the work information and the environment information, changes at least one of a reproduction speed and a reproduction position to precede a work of the worker, and creates a content for presenting information of a work of a next process, with a reproduction speed faster than the estimated work speed and
the calculation device (101) includes an output unit (19) that outputs the created content,
**characterized in that**
the work process management unit (12) determines that a process is ended when the worker performs a specific operation.

2. The control device according to claim 1, wherein
the work process management unit (12) creates a content whose reproduction speed is adjusted according to the work speed of the worker.

3. The control device according to claim 1 or 2, wherein
the work process management unit (12) creates a content including scenes switched with lapse of time.

4. The control device according to one of the preceding claims, wherein
the work process management unit (12) creates a content of a next process in a series of work processes from the estimated work process.

5. The control device according to claim 4, wherein
the work process management unit (12) creates a content to include at least two or more of character information, voice information, pointer information, still image information, and moving image information.

6. The control device according to claim 4 or 5, wherein
the work process management unit (12) determines a skill level of the worker based on a work time of each work process.

7. The control device according to claim 6, wherein
the work process management unit (12) does not display a content in a case where it is determined that the skill level of the worker is high.

8. The control device according to one of the preceding claims, wherein
the acquisition unit (11) acquires, as work information of the worker, at least one of an image imaged by an imaging device and an operation input of a user.

9. The control device according to one of the preceding claims, wherein
the work process management unit (12) creates a content of a next process of presenting information of the work 0.5 seconds to 3 seconds earlier than the work of the worker.

10. The control device according to one of the preceding claims, wherein
the work process management unit (12) determines that a process is ended when the worker performs a finger confirmation operation and a line-of-sight position of the worker is a place to be confirmed in the process.

11. An information presentation method performed by a control device according to one of the preceding claims,
the information presentation method comprising:
acquiring, by the calculation device, work information of the worker, said work information being information regarding an operation of the worker, including at least one of operations of the fingers, positions of the hands, a position of the head, and a line of sight,
acquiring, by the acquisition unit (11), environment information of a periphery of the worker, wherein the environment information includes information of an object on which the worker performs a work,
estimating, by the calculation device (101), a work process and a work speed executed by the worker from the work information and the environment information,
changing at least one of a reproduction speed and a reproduction position to precede a work of the worker, and creating a content for presenting information of a work of a next process; with a reproduction speed faster than the estimated work speed and
outputting, by the calculation device, the created content,
**characterized in that** the work process management unit determines that a process is ended when the worker performs a specific operation.

## Patentansprüche

1. Steuerungsvorrichtung, die einem Arbeiter Informationen präsentiert, umfassend:
einen Computer (10), der eine Rechenvorrichtung (101), die eine vorbestimmte Rechenverarbeitung ausführt, und eine Speichervorrichtung (102, 103), auf die die Rechenvorrichtung (101) zugreifen kann, wobei die Rechenvorrichtung (101) eine Erfassungseinheit (11) umfasst, die Arbeitsinformationen des Arbeiters erfasst, wobei die Arbeitsinformationen Informationen bezüglich eines Vorgangs des Arbeiters sind, die mindestens eines aus Vorgängen der Finger, einer Position der Hände, einer Position des Kopfes und einer Blicklinie umfassen, und Umgebungsinformationen einer Umgebung des Arbeiters, wobei die Umgebungsinformationen Informationen eines Objekts umfassen, an dem der Arbeiter eine Arbeit durchführt,
wobei die Rechenvorrichtung (101) eine Arbeitsprozessverwaltungseinheit (12) umfasst, die einen Arbeitsprozess und eine Arbeitsgeschwindigkeit, die von dem Arbeiter ausgeführt werden, aus den Arbeitsinformationen und den Umgebungsinformationen schätzt, mindestens eines aus einer Wiedergabegeschwindigkeit und einer Wiedergabeposition ändert, um einen Vorsprung gegenüber einer Arbeit des Arbeiters zu haben, und einen Inhalt zum Präsentieren von Informationen einer Arbeit eines nächsten Prozesses mit einer Wiedergabegeschwindigkeit erzeugt, die schneller als die geschätzte Arbeitsgeschwindigkeit ist, und die Rechenvorrichtung (101) eine Ausgabeeinheit (19) umfasst, die den erzeugten Inhalt ausgibt,
**dadurch gekennzeichnet, dass**
die Arbeitsprozessverwaltungseinheit (12) erkennt, dass ein Prozess beendet ist, wenn der Arbeiter einen spezifischen Vorgang durchführt.

2. Steuerungsvorrichtung nach Anspruch 1, wobei die Arbeitsprozessverwaltungseinheit (12) einen Inhalt erzeugt, dessen Wiedergabegeschwindigkeit gemäß der Arbeitsgeschwindigkeit des Arbeiters angepasst wird.

3. Steuerungsvorrichtung nach Anspruch 1 oder 2, wobei die Arbeitsprozessverwaltungseinheit (12) einen Inhalt erzeugt, der Szenen umfasst, die mit dem Verstreichen von Zeit umgeschaltet werden.

4. Steuerungsvorrichtung nach einem der vorhergehenden Ansprüche, wobei die Arbeitsprozessverwaltungseinheit (12) einen Inhalt eines nächsten Prozesses in einer Reihe von Arbeitsprozessen aus dem geschätzten Arbeitsprozess erzeugt.

5. Steuerungsvorrichtung nach Anspruch 4, wobei die Arbeitsprozessverwaltungseinheit (12) einen Inhalt erzeugt, der wenigstens zwei oder mehr aus Zeicheninformationen, Sprachinformationen, Zeigerinformationen, Standbildinformationen und Bewegtbildinformationen umfasst.

6. Steuerungsvorrichtung nach Anspruch 4 oder 5, wobei die Arbeitsprozessverwaltungseinheit (12) eine Fertigkeitsstufe des Arbeiters basierend auf einer Arbeitszeit jedes Arbeitsprozesses bestimmt.

7. Steuerungsvorrichtung nach Anspruch 6, wobei die Arbeitsprozessverwaltungseinheit (12) einen Inhalt nicht anzeigt, falls bestimmt wird, dass die Fertigkeitsstufe des Arbeiters hoch ist.

8. Steuerungsvorrichtung nach einem der vorhergehenden Ansprüche, wobei die Erfassungseinheit (11) als Arbeitsinformationen des Arbeiters mindestens eines aus einem Bild, das von einer Bildaufnahmevorrichtung aufgenommen wird, und einer Vorgangseingabe eines Benutzers erfasst.

9. Steuerungsvorrichtung nach einem der vorhergehenden Ansprüche, wobei die Arbeitsprozessverwaltungseinheit (12) einen Inhalt eines nächsten Prozesses zum Präsentieren von Informationen der Arbeit 0,5 Sekunden bis 3 Sekunden früher als die Arbeit des Arbeiters erzeugt.

10. Steuerungsvorrichtung nach einem der vorhergehenden Ansprüche, wobei die Arbeitsprozessverwaltungseinheit (12) bestimmt, dass ein Prozess beendet ist, wenn der Arbeiter einen Fingerbestätigungsvorgang durchführt und eine Blicklinienposition des Arbeiters ein in dem Prozess zu bestätigender Ort ist.

11. Informationspräsentationsverfahren, das von einer Steuerungsvorrichtung nach einem der vorhergehenden Ansprüche durchgeführt wird, wobei das Informationspräsentationsverfahren umfasst:
Erfassen von Arbeitsinformationen des Arbeiters durch die Rechenvorrichtung, wobei die Arbeitsinformationen Informationen bezüglich eines Vorgangs des Arbeiters sind, die mindestens eines aus Vorgängen der Finger, Positionen der Hände, einer Position des Kopfes und einer Blicklinie umfassen,
Erfassen von Umgebungsinformationen einer Umgebung des Arbeiters durch die Erfassungseinheit (11), wobei die Umgebungsinformationen Informationen eines Objekts umfassen, an dem der Arbeiter eine Arbeit durchführt,
Schätzen und einer Arbeitsgeschwindigkeit und eines Arbeitsprozesses, die von dem Arbeiter ausgeführt werden, durch die Rechenvorrichtung (101), aus den Arbeitsinformationen und den Umgebungsinformationen,
Ändern mindestens eines von einer Wiedergabegeschwindigkeit und einer Wiedergabeposition, um einer Arbeit des Arbeiters vorauszugehen, und Erzeugen eines Inhalts zum Präsentieren von Informationen einer Arbeit eines nächsten Prozesses mit einer Wiedergabegeschwindigkeit, die schneller ist als die geschätzte Arbeitsgeschwindigkeit, und
Ausgeben des erzeugten Inhalts durch die Rechenvorrichtung,
**dadurch gekennzeichnet, dass** die Arbeitsprozessverwaltungseinheit erkennt, dass ein Prozess beendet ist, wenn der Arbeiter einen spezifischen Vorgang durchführt.

## Revendications

1. Dispositif de commande qui présente des informations à un travailleur, comprenant
un ordinateur (10) qui inclut un dispositif (101) de calcul qui exécute des processus de calcul prédéterminés et un dispositif (102, 103) de stockage accessible par le dispositif (101) de calcul, dans lequel
le dispositif (101) de calcul inclut une unité (11) d'acquisition qui acquiert des informations de travail du travailleur, lesdites informations de travail étant des informations se rapportant à une opération du travailleur, incluant au moins une parmi des opérations des doigts, une position des mains, une position de la tête et une ligne de vision et des informations environnementales sur une périphérie du travailleur, dans lequel les informations environnementales incluent des informations d'un objet sur lequel le travailleur effectue un travail,
le dispositif (101) de calcul inclut une unité (12) de gestion de processus de travail qui estime un processus de travail et une vitesse de travail exécuté par le travailleur à partir des informations de travail et des informations environnementales, change au moins une parmi une vitesse de reproduction et une position de reproduction pour précéder un travail du travailleur, et crée un contenu pour présenter des informations d'un travail d'un processus suivant, avec une vitesse de reproduction plus rapide que la vitesse de travail estimée, et
le dispositif (101) de calcul inclut une unité (19) de sortie qui délivre en sortie le contenu créé,
**caractérisé en ce que**
l'unité (12) de gestion de processus de travail détermine qu'un processus est terminé lorsque le travailleur effectue une opération spécifique.

2. Dispositif de commande selon la revendication 1, dans lequel
l'unité (12) de gestion de processus de travail crée un contenu dont la vitesse de reproduction est ajustée en fonction de la vitesse de travail du travailleur.

3. Dispositif de commande selon la revendication 1 ou 2, dans lequel
l'unité (12) de gestion de processus de travail crée un contenu incluant des scènes commutées par intervalles.

4. Dispositif de commande selon l'une des revendications précédentes, dans lequel
l'unité (12) de gestion de processus de travail crée un contenu d'un processus suivant dans une série de processus de travail à partir du processus de travail estimé.

5. Dispositif de commande selon la revendication 4, dans lequel
l'unité (12) de gestion de processus de travail crée un contenu pour inclure au moins deux ou plus parmi des informations de caractères, des informations vocales, des informations de pointeur, des informations d'images fixes, et des informations d'images animées.

6. Dispositif de commande selon la revendication 4 ou 5, dans lequel
l'unité (12) de gestion de processus de travail détermine un niveau de compétence du travailleur sur la base d'un temps de travail de chaque processus de travail.

7. Dispositif de commande selon la revendication 6, dans lequel
l'unité (12) de gestion de processus de travail n'affiche pas un contenu dans un cas où il est déterminé que le niveau de compétence du travailleur est élevé.

8. Dispositif de commande selon l'une des revendications précédentes, dans lequel
l'unité (11) d'acquisition acquiert, comme des informations de travail du travailleur, au moins une parmi une image imagée par un dispositif d'imagerie et une entrée d'opération d'un utilisateur.

9. Dispositif de commande selon l'une des revendications précédentes, dans lequel
l'unité (12) de gestion de processus de travail crée un contenu d'un processus suivant de présentation d'informations du travail 0,5 seconde à 3 secondes avant le travail du travailleur.

10. Dispositif de commande selon l'une des revendications précédentes, dans lequel
l'unité (12) de gestion de processus de travail détermine qu'un processus est terminé lorsque le travailleur effectue une opération de confirmation au doigt et qu'une position de ligne de vision du travailleur est un lieu devant être confirmé dans le processus.

11. Procédé de présentation d'informations mis en œuvre par un dispositif de commande selon l'une des revendications précédentes,
le procédé de présentation d'informations comprenant :
l'acquisition, par le dispositif de calcul, d'informations de travail du travailleur, lesdites informations de travail étant des informations se rapportant à une opération du travailleur, incluant au moins une parmi des opérations des doigts, des positions des mains, une position de la tête et une ligne de vision,
l'acquisition, par l'unité (11) d'acquisition d'informations environnementales sur une périphérie du travailleur, dans lequel les informations environnementales incluent des informations d'un objet sur lequel le travailleur effectue un travail,
l'estimation, par le dispositif (101) de calcul, d'un processus de travail et d'une vitesse de travail exécuté par le travailleur à partir des informations de travail et des informations environnementales,
le changement d'au moins une parmi une vitesse de reproduction et une position de reproduction pour précéder un travail du travailleur, et la création d'un contenu pour présenter des informations d'un travail d'un processus suivant, avec une vitesse de reproduction plus rapide que la vitesse de travail estimée, et
la délivrance en sortie, par le dispositif de calcul, du contenu créé,
**caractérisé en ce que** l'unité de gestion de processus de travail détermine qu'un processus est terminé lorsque le travailleur effectue une opération spécifique.
